# EUROPÄISCHE PATENTSCHRIFT

(11) **EP 4 370 807 B1**
(45) Veröffentlichungstag und Bekanntmachung des Hinweises auf die Patenterteilung: **05.08.2026**
(21) Anmeldenummer: 22734104.7
(22) Anmeldetag: 13.06.2022
(51) Int. Cl.: F16C 17/02, F16C 33/06, F16C 33/14

(54) **VERFAHREN ZUR HERSTELLUNG EINER GLEITLAGERHÜLSE, GLEITLAGERHÜLSE, GLEITLAGER UND DESSEN VERWENDUNG**
METHOD FOR PRODUCING A PLAIN BEARING SLEEVE, PLAIN BEARING SLEEVE, PLAIN BEARING AND USE THEREOF
PROCÉDÉ DE PRODUCTION D'UN MANCHON DE PALIER LISSE, MANCHON DE PALIER LISSE, PALIER LISSE ET SON UTILISATION

(30) Priorität: 13.07.2021 DE 102021118010
(43) Veröffentlichungstag der Anmeldung: 22.05.2024
(73) Patentinhaber: Schaeffler Technologies AG & Co. KG, 91074 Herzogenaurach (DE)
(72) Erfinder: SANDERS, Bernhard, 90574 Roßtal (DE)
(74) Vertreter: Schaeffler Technologies
(86) Internationale Anmeldenummer: PCT/DE2022/100440
(87) Internationale Veröffentlichungsnummer: WO 2023/284910

(56) Entgegenhaltungen:
- WO-A1-2020/243763
- CN-A- 108 746 559

## Beschreibung

Die Erfindung betrifft ein Verfahren zur Herstellung einer Gleitlagerhülse mit einer Länge der Gleitlagerhülse, welche größer als ein Innendurchmesser der Gleitlagerhülse ausgebildet ist und mit einer Wandstärke der Gleitlagerhülse, welche kleiner als 8% des Innendurchmessers der Gleitlagerhülse dimensioniert ist.

Gleitlager und Gleitlagerhülsen oder -buchsen sind allgemein bekannt und dienen dazu Drehbewegungen, Schwenkbewegungen und Linearbewegungen zwischen zwei an der Gleitlagerhülse angeordneten Bauteilen möglichst reibungsarm zu ermöglichen. Dabei ist ein erstes Bauteil an der Innenumfangsfläche der Gleitlagerhülse angeordnet, wobei ein zweites Bauteil an der Außenumfangsfläche der Gleitlagerhülse angeordnet ist.

Die AT 522 155 A4 offenbart eine Gleitlagerung umfassend ein äußeres Ringelement, ein inneres Ringelement als Anschlussbauteile und ein Gleitlagerelement zwischen den beiden Ringelementen.

Die WO 2020 / 243 763 A1 beschreibt ein Gleitlager, insbesondere Planetenradradialgleitlager zur Lagerung eines Planetenrades an einem Planetenradbolzen in einem Planetengetriebe einer Windkraftanlage. Das Gleitlager weist eine Innenmantelfläche und eine Außenmantelfläche auf, wobei an zumindest einem ersten Längsende des Gleitlagers an der Innenmantelfläche oder an der Außenmantelfläche eine Freistellung ausgebildet ist. Das Gleitlager umfasst dabei einen Stützkörper, der insbesondere als eine Buchse ausgebildet ist. Der Stützkörper ist insbesondere aus einem metallischen Werkstoff, wie beispielsweise Bronze, und bildet die Innenmantelfläche aus. Zudem weist der Stützkörper eine außenliegend aufgebrachte, gegebenenfalls mehrschichtige Gleitschicht auf, welche auf ihrer Außenmantelfläche eine Gleitfläche bildet.

Die CN 108 746 559 A offenbart ein Bimetall-Kompositbauteil zur Bildung der Außenfläche einer Metallhülse, welche mechanisch nachbearbeitet wird.

Hülsen oder Buchsen für Gleitlagerungen werden in der Regel durch spanende Bearbeitung hergestellt, wobei die Hülse in einem Spannfutter eingespannt ist und um die Mittelachse rotiert wird, während ein Drehwerkzeug nacheinander die innere und äußere Umfangsfläche bearbeitet.

Insbesondere die Herstellung besonders dünnwandiger Gleitlagerhülsen bringt die Gefahr mit sich, dass die geforderten Maßtoleranzen für das fertige Bauteil nicht erfüllt werden können. Außerdem kommt es häufig zu Beschädigungen der Gleitfläche durch ein Einspannen des Bauteils während der Bearbeitungsschritte.

Die Aufgabe der vorliegenden Erfindung besteht darin, ein Verfahren zur Herstellung einer Gleitlagerhülse und eine danach hergestellte Gleitlagerhülse bereitzustellen, das eine schnelle und präzise Herstellung bei geringen Herstellungstoleranzen und Oberflächenbeschädigungen ermöglicht.

Die Aufgabe wird für das Verfahren mit den Merkmalen des Anspruchs 1 gelöst.

Bevorzugte oder vorteilhafte Ausführungsformen der Erfindung ergeben sich aus den Unteransprüchen, der nachfolgenden Beschreibung sowie den beigefügten Figuren.

Das erfindungsgemäße Verfahren zur Herstellung einer Gleitlagerhülse mit einer Länge der Gleitlagerhülse, welche größer als ein Innendurchmesser der Gleitlagerhülse ausgebildet ist und mit einer Wandstärke der Gleitlagerhülse, welche kleiner als 8% des Innendurchmessers der Gleitlagerhülse dimensioniert ist, ist durch folgende Schritte gekennzeichnet:
a) Bereitstellen eines Hülsenrohlings, wobei mindestens drei Gewindebohrungen an einer ersten Stirnseite des Hülsenrohlings angeordnet werden;
b) einseitiges Einspannen des Hülsenrohlings an dessen Hülsenaußendurchmesser an einem der ersten Stirnseite zugeordneten ersten Ende des Hülsenrohling derart, dass der Hülsenrohling um seine Hülsenlängsachse rotierbar ist und Bearbeiten des Hülseninnendurchmessers des Hülsenrohlings auf das Maß des Innendurchmessers der Gleitlagerhülse;
c) stirnseitiges Verschrauben des Hülsenrohlings mittels der Gewindebohrungen derart, dass dieser um seine Hülsenlängsachse rotierbar ist und Bearbeiten des Hülsenaußendurchmessers des Hülsenrohlings, wobei die Wandstärke der Gleitlagerhülse ausgebildet wird; und
d) einseitiges Spannen des Hülsenrohlings am Innendurchmesser auf einer dem ersten Ende gegenüberliegenden zweiten Ende des Hülsenrohlings und Abtrennen eines Ringes umfassend die Gewindebohrungen vom Hülsenrohling unter Ausbildung der Gleitlagerhülse mit der Länge.

Das Verfahren hat den Vorteil, dass die Gleitlagerhülse mit geringer Toleranz der Wandstärke von ± 0,005 mm hergestellt werden kann. Dadurch sind in Großgleitlagern, wie beispielsweise im Windkraftbereich, hohe Laufruhe und geringer Verschleiß über die geforderten Laufzeiten einer solchen Anlage erzielbar.

Vorzugsweise erfolgt in Schritt c) die Bearbeitung des Hülsenaußendurchmesser des Hülsenrohlings durch Drehen. Auch in Schritt b) erfolgt die Bearbeitung des Hülseninnendurchmesser des Hülsenrohlings vorzugsweise durch Drehen. Das Drehen ermöglicht es, am Außendurchmesser der Gleitlagerhülse einen Mittenrauwert (= arithmetisches Mittel der Abweichungen von der Mittellinie in µm) von Ra < 0,6 und am Innendurchmesser der Gleitlagerhülse einen Mittenrauwert von Ra < 1,6 zu erreichen. Dies trägt weiterhin beim Einsatz einer solchen Gleitlagerhülse in einem Gleitlager zu hoher Laufruhe und langer Lebensdauer bei.

Dadurch sind in Großgleitlagern mit einer erfindungsgemäß hergestellten Gleitlagerhülse, wie beispielsweise im Windkraftbereich, hohe Laufruhe und geringer Verschleiß über die geforderten Laufzeiten einer solchen Anlage erzielbar.

Es sind vorzugsweise mehr als drei Gewindebohrungen an der ersten Stirnseite des Hülsenrohlings vorgesehen, insbesondere sechs oder mehr Gewindebohrungen. So ist ein gleichmäßiges Verschrauben des Hülsenrohling über die erste Stirnseite und eine gleichmäßige und laufruhige Rotation des Hülsenrohlings um seine Hülsenlängsachse während der Bearbeitung des Hülsenaußendurchmessers möglich.

Besonders bevorzugt ist es, wenn die Wandstärke der Gleitlagerhülse kleiner als etwa 5% des Innendurchmessers der Gleitlagerhülse dimensioniert wird.

Die Länge der Gleitlagerhülse wird bevorzugt größer 300 mm ausgebildet und liegt insbesondere im Bereich von 300 bis 600 mm. Die Wandstärke der Gleitlagerhülse wird vorzugsweise bis zu 20 mm betragend ausgebildet.

Bevorzugt wird die Gleitlagerhülse aus Bronze ausgebildet. Das Material weist gute Gleiteigenschaften auf und lässt sich mit dem erfindungsgemäßen Verfahren besonders gut bearbeiten.

Ein Gleitlager, umfassend eine nach dem erfindungsgemäßen Verfahren ausgebildete Gleitlagerhülse umfasst dabei einen Innenring und einen Außenring, wobei die Gleitlagerhülse insbesondere als Innenring eingesetzt wird. Die Gleitlagerhülse kann aber alternativ oder zusätzlich auch den Außenring des Gleitlagers bilden.

Die Verwendung eines Gleitlagers umfassend eine nach dem erfindungsgemäßen Verfahren ausgebildete Gleitlagerhülse im Bereich eines Lagers einer Windkraftanlage, insbesondere Rotorlagers für den Rotor einer Windkraftanlage, hat sich bewährt. Aber auch ein Einsatz bei Großgleitlagern für andere Anwendungsbereiche, zum Beispiel im Bereich von Schiffen, Kränen, der Bahn oder der Schwerindustrie, ist bevorzugt.

Die Figuren 1 bis 5 sollen ein erfindungsgemäßes Verfahren, die damit ausgebildete Gleitlagerhülse und deren Einsatz beispielhaft erläutern. So zeigt
- Figur 1: eine Gleitlagerhülse in dreidimensionaler Ansicht,
- Figur 2: einen Hülsenrohling in dreidimensionaler Ansicht,
- Figur 3: den Hülsenrohling gemäß Figur 2 mit Gewindebohrungen,
- Figur 4: einen Längsschnitt durch ein Gleitlager mit der Gleitlagerhülse gemäß Figur 1, und
- Figur 5: eine Windkraftanlage.

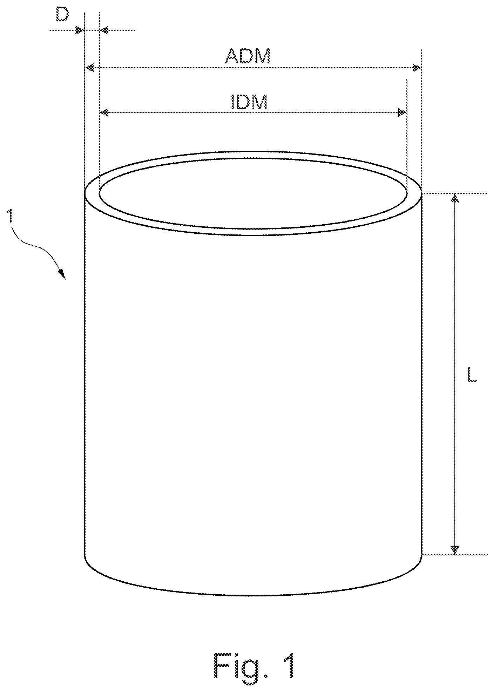

Figur 1 zeigt eine Gleitlagerhülse 1 in dreidimensionaler Ansicht. Die Gleitlagerhülse 1 weist eine Länge L und eine Außendurchmesser ADM auf, wobei die Länge L größer als ein Innendurchmesser IDM der Gleitlagerhülse 1 ausgebildet ist. Eine Wandstärke D der Gleitlagerhülse 1 ist hier kleiner als 5% des Innendurchmessers IDM der Gleitlagerhülse 1 dimensioniert.

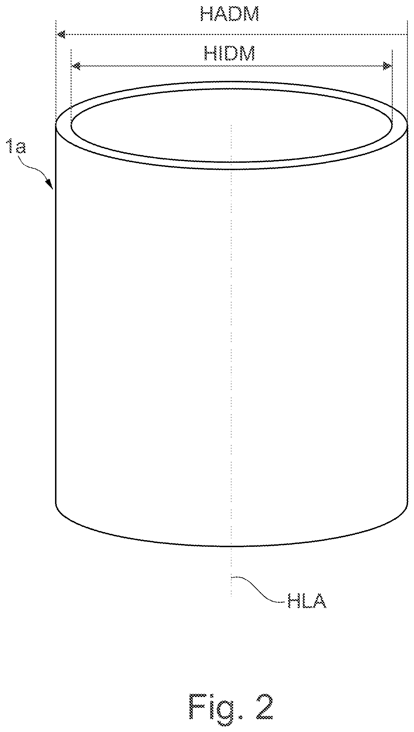

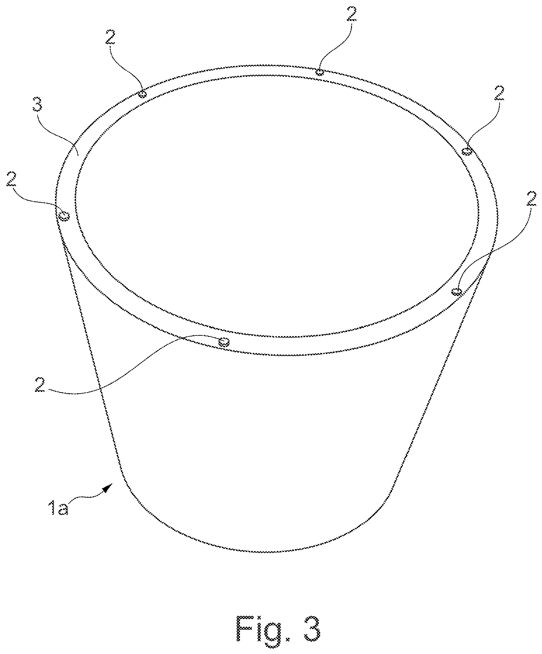

Die Gleitlagerhülse 1 ist mittels eines Verfahrens aus einem Hülsenrohling 1a gemäß Figur 2 hergestellt, wobei das Verfahren folgende Schritte umfasst:
a) Bereitstellen des Hülsenrohlings 1a, wobei mindestens drei Gewindebohrungen 2 (siehe Figur 3) an einer ersten Stirnseite 3 des Hülsenrohlings 1a angeordnet werden;
b) einseitiges Einspannen des Hülsenrohlings 1a an dessen Hülsenaußendurchmesser HADM an einem der ersten Stirnseite 3 zugeordneten ersten Ende des Hülsenrohling 1a derart, dass der Hülsenrohling 1a um seine Hülsenlängsachse HLA rotierbar ist, und Bearbeiten des Hülseninnendurchmessers HIDM des Hülsenrohlings 1a auf das Maß des Innendurchmessers IDM der Gleitlagerhülse 1;
c) stirnseitiges Verschrauben des Hülsenrohlings 1a mittels der Gewindebohrungen 2 derart, dass dieser um seine Hülsenlängsachse HLA rotierbar ist und Bearbeiten des Hülsenaußendurchmessers HADM des Hülsenrohlings 1a, wobei die Wandstärke D der Gleitlagerhülse 1 ausgebildet wird; und
d) einseitiges Spannen des Hülsenrohlings 1a am Innendurchmesser IDM auf einer dem ersten Ende gegenüberliegenden zweiten Ende des Hülsenrohlings 1a und Abtrennen eines Ringes umfassend die Gewindebohrungen 2 vom Hülsenrohling 1a unter Ausbildung der Gleitlagerhülse 1 mit der Länge L.

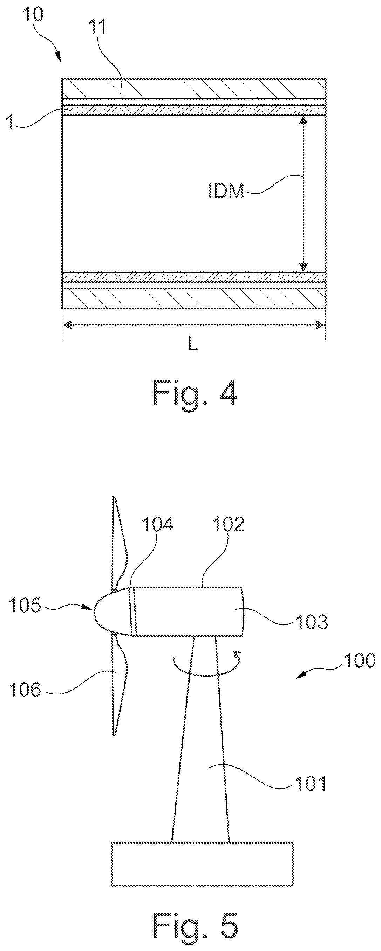

Figur 4 zeigt einen Längsschnitt durch ein Gleitlager 10 mit der Gleitlagerhülse 1 gemäß Figur 1 als Innenring und einem Außenring 11. Die Gleitlagerhülse 1 kann aber alternativ oder zusätzlich auch den Außenring 11 des Gleitlagers 10 bilden.

Figur 5 zeigt schematisch eine Darstellung einer Windkraftanlage 100 zum Erzeugen von elektrischer Energie aus Windenergie. Die Windkraftanlage 100 umfasst eine Gondel 102, die an einem Turm 101 drehbar angeordnet ist. Die Gondel 102 weist ein Gondelgehäuse 103 auf. Im Gondelgehäuse 103 befindet sich ein Generator der Windkraftanlage 100. Am Gondelgehäuse 103 ist ein Rotor 105 umfassend Rotorblätter 106 über eine Rotorlagerung 104 drehbar gelagert. Ein Gleitlager 10 (vergleiche beispielsweise Figur 4) mit einer Gleitlagerhülse 1 (vergleiche beispielsweise Figur 1) ist dabei im Bereich der Rotorlagerung 104 eingesetzt.

### Bezugszeichenliste

- 1: Gleitlagerhülse
- 1a: Hülsenrohling
- 2: Gewindebohrung
- 3: erste Stirnseite
- 10: Gleitlager
- 11: Außenring
- D: Wandstärke der Gleitlagerhülse
- L: Länge der Gleitlagerhülse
- IDM: Innendurchmesser der Gleitlagerhülse
- ADM: Außendurchmesser der Gleitlagerhülse
- HADM: Hülsenaußendurchmesser des Hülsenrohlings
- HIDM: Hülseninnendurchmesser des Hülsenrohlings
- HLA: Hülsenlängsachse
- 100: Windkraftanlage
- 101: Turm
- 102: Gondel
- 103: Gondelgehäuse
- 104: Rotorlagerung
- 105: Rotor
- 106: Rotorblätter

## Patentansprüche

1. Verfahren zur Herstellung einer Gleitlagerhülse (1) mit einer Länge (L) der Gleitlagerhülse (1), welche größer als ein Innendurchmesser (IDM) der Gleitlagerhülse (1) ausgebildet ist und mit einer Wandstärke (D) der Gleitlagerhülse (1), welche kleiner als 8% des Innendurchmessers (IDM) der Gleitlagerhülse (1) dimensioniert ist, **gekennzeichnet durch** folgende Schritte:
a) Bereitstellen eines Hülsenrohlings (1a), wobei mindestens drei Gewindebohrungen (2) an einer ersten Stirnseite (3) des Hülsenrohlings (1a) angeordnet werden;
b) einseitiges Einspannen des Hülsenrohlings (1a) an dessen Hülsenaußendurchmesser (HADM) an einem der ersten Stirnseite (3) zugeordneten ersten Ende des Hülsenrohling (1a) derart, dass der Hülsenrohling (1a) um seine Hülsenlängsachse (HLA) rotierbar ist, und Bearbeiten des Hülseninnendurchmessers (HIDM) des Hülsenrohlings (1a) auf das Maß des Innendurchmessers (IDM) der Gleitlagerhülse (1);
c) stirnseitiges Verschrauben des Hülsenrohlings (1a) mittels der Gewindebohrungen (2) derart, dass dieser um seine Hülsenlängsachse (HLA) rotierbar ist und Bearbeiten des Hülsenaußendurchmessers (HADM) des Hülsenrohlings (1a), wobei die Wandstärke (D) der Gleitlagerhülse (1) ausgebildet wird; und
d) einseitiges Spannen des Hülsenrohlings (1a) am Innendurchmesser (IDM) auf einer dem ersten Ende gegenüberliegenden zweiten Ende des Hülsenrohlings (1a) und Abtrennen eines Ringes umfassend die Gewindebohrungen (2) vom Hülsenrohling (1a) unter Ausbildung der Gleitlagerhülse (1) mit der Länge (L).

2. Verfahren nach Anspruch 1, wobei in Schritt c) die Bearbeitung des Hülsenaußendurchmesser (HADM) des Hülsenrohlings (1a) durch Drehen erfolgt.

3. Verfahren nach Anspruch 1 oder 2, wobei in Schritt b) die Bearbeitung des Hülseninnendurchmesser (HIDM) des Hülsenrohlings (1a) durch Drehen erfolgt.

4. Verfahren nach den Ansprüchen 2 und 3, wobei die Gleitlagerhülse (1) mit dem Innendurchmesser (IDM) und einem Außendurchmesser (ADM) gebildet wird, wobei am Außendurchmesser (ADM) der Gleitlagerhülse (1) ein Mittenrauwert von Ra < 0,6 µm und am Innendurchmesser (IDM) der Gleitlagerhülse (1) ein Mittenrauwert von Ra < 1,6 µm ausgebildet wird.

5. Verfahren nach Anspruch 4, wobei die Wandstärke (D) der Gleitlagerhülse (1) kleiner als 5% des Innendurchmessers (IDM) der Gleitlagerhülse (1) ausgebildet wird.

6. Verfahren nach Anspruch 4 oder 5, wobei die Länge (L) der Gleitlagerhülse (1) größer 300 mm, insbesondere im Bereich von 300 bis 600 mm, ausgebildet wird.

7. Verfahren nach einem der Ansprüche 4 bis 6, wobei die Wandstärke (D) der Gleitlagerhülse (1) bis zu 20 mm betragend ausgebildet wird.

8. Verfahren nach einem der Ansprüche 4 bis 7, wobei die Gleitlagerhülse (1) aus Bronze ausgebildet wird.

## Claims

1. A method for producing a plain bearing sleeve (1) with a length (L) of the plain bearing sleeve (1) that is greater than an inner diameter (IDM) of the plain bearing sleeve (1) and with a wall thickness (D) of the plain bearing sleeve (1) that is dimensioned as less than 8% of the inner diameter (IDM) of the plain bearing sleeve (1), **characterised by** the following steps:
a) providing a sleeve blank (1a), wherein at least three threaded boreholes (2) are arranged on a first end face (3) of the sleeve blank (1a);
b) clamping the sleeve blank (1a) on one side at its outer sleeve diameter (HADM) at a first end of the sleeve blank (1a) associated with the first end face (3), such that the sleeve blank (1a) can be rotated about its longitudinal sleeve axis (HLA), and machining the inner sleeve diameter (HIDM) of the sleeve blank (1a) to the dimension of the inner diameter (IDM) of the plain bearing sleeve (1);
c) end-face screwing the sleeve blank (1a) by means of the threaded boreholes (2), such that this is rotatable about its longitudinal sleeve axis (HLA) and machining the outer sleeve diameter (HADM) of the sleeve blank (1a), wherein the wall thickness (D) of the plain bearing sleeve (1) is formed; and
d) clamping the sleeve blank (1a) on one side at the inner diameter (IDM) on a second end of the sleeve blank (1a) opposite the first end and separating a ring comprising the threaded boreholes (2) from the sleeve blank (1a) thereby forming the plain bearing sleeve (1) with the length (L).

2. The method according to claim 1, wherein, in step c), the machining of the outer sleeve diameter (HADM) of the sleeve blank (1a) is performed by turning.

3. The method according to claim 1 or 2, wherein, in step b), the machining of the inner sleeve diameter (HIDM) of the sleeve blank (1a) is performed by turning.

4. The method according to claims 2 and 3, wherein the plain bearing sleeve (1) is formed with the inner diameter (IDM) and an outer diameter (ADM), wherein a mean roughness value of Ra < 0.6 µm is formed on the outer diameter (ADM) of the plain bearing sleeve (1) and a mean roughness value of Ra < 1.6 µm is formed on the inner diameter (IDM) of the plain bearing sleeve (1).

5. The method according to claim 4, wherein the wall thickness (D) of the plain bearing sleeve (1) is formed to be less than 5% of the inner diameter (IDM) of the plain bearing sleeve (1).

6. The method according to claim 4 or 5, wherein the length (L) of the plain bearing sleeve (1) is greater than 300 mm, in particular in the range of 300 to 600 mm.

7. The method according to any one of claims 4 to 6, wherein the wall thickness (D) of the plain bearing sleeve (1) is designed to be up to 20 mm.

8. The method according to any one of claims 4 to 7, wherein the plain bearing sleeve (1) is made of bronze.

## Revendications

1. Procédé de production d'un manchon de palier lisse (1) comportant une longueur (L) du manchon de palier lisse (1) qui est réalisée supérieure à un diamètre intérieur (IDM) du manchon de palier lisse (1) et comportant une épaisseur de paroi (D) du manchon de palier lisse (1) qui est dimensionnée inférieure à 8 % du diamètre intérieur (IDM) du manchon de palier lisse (1), **caractérisé par** les étapes suivantes consistant à :
a) fournir une ébauche de manchon (1a), dans lequel au moins trois alésages filetés (2) sont agencés sur une première face avant (3) de l'ébauche de manchon (1a) ;
b) serrer d'un côté l'ébauche de manchon (1a) au niveau de son diamètre extérieur de manchon (HADM), au niveau d'une première extrémité de l'ébauche de manchon (1a) associée à la première face avant (3) de manière à ce que l'ébauche de manchon (1a) puisse tourner autour de son axe longitudinal (HLA) de manchon, et usiner le diamètre intérieur de manchon (HIDM) de l'ébauche de manchon (1a) à la dimension du diamètre intérieur (IDM) du manchon de palier lisse (1) ;
c) visser sur la face avant l'ébauche de manchon (1a) par le biais des alésages filetés (2) de manière à ce qu'elle puisse tourner autour de son axe longitudinal (HLA) de manchon et usiner le diamètre extérieur de manchon (HADM) de l'ébauche de manchon (1a), dans lequel l'épaisseur de paroi (D) du manchon de palier lisse (1) est réalisée ; et
d) serrer d'un côté l'ébauche de manchon (1a) au niveau du diamètre intérieur (IDM) sur une seconde extrémité de l'ébauche de manchon (1a) opposée à la première extrémité et séparer une bague comprenant les alésages filetés (2) de l'ébauche de manchon (1a) pour former le manchon de palier lisse (1) de longueur (L).

2. Procédé selon la revendication 1, dans lequel à l'étape c), l'usinage du diamètre extérieur de manchon (HADM) de l'ébauche de manchon (1a) est effectué par tournage.

3. Procédé selon la revendication 1 ou 2, dans lequel, à l'étape b), l'usinage du diamètre intérieur de manchon (HIDM) de l'ébauche de manchon (1a) est effectué par tournage.

4. Procédé selon les revendications 2 et 3, dans lequel le manchon de palier lisse (1) est formé avec le diamètre intérieur (IDM) et un diamètre extérieur (ADM), dans lequel une valeur de rugosité moyenne de Ra < 0,6 µm est formée sur le diamètre extérieur (ADM) du manchon de palier lisse (1) et une valeur de rugosité moyenne de Ra < 1,6 µm est formée sur le diamètre intérieur (IDM) du manchon de palier lisse (1).

5. Procédé selon la revendication 4, dans lequel l'épaisseur de paroi (D) du manchon de palier lisse (1) est réalisée de manière à être inférieure à 5 % du diamètre intérieur (IDM) du manchon de palier lisse (1).

6. Procédé selon la revendication 4 ou 5, dans lequel la longueur (L) du manchon de palier lisse (1) est réalisée supérieure à 300 mm, et se situe en particulier dans la plage allant de 300 à 600 mm.

7. Procédé selon l'une des revendications 4 à 6, dans lequel l'épaisseur de paroi (D) du manchon de palier lisse (1) est réalisée pour atteindre jusqu'à 20 mm.

8. Procédé selon l'une des revendications 4 à 7, dans lequel le manchon de palier lisse (1) est réalisé en bronze.
